# EUROPEAN PATENT APPLICATION

(11) **EP 4 664 737 A1**
(43) Date of publication of application: **17.12.2025**
(21) Application number: 24305929.2
(22) Date of filing: 13.06.2024
(51) Int. Cl.: H02M 1/00, G05F 1/56, H02M 3/158

(54) **VOLTAGE REGULATOR WITH AGING MITIGATION**

(71) Applicant: NXP USA, Inc., Austin TX 78735 (US)
(72) Inventor: Romeo, Dominique, 31023 Toulouse (FR)
(74) Representative: Krott, Michel

(57) **Abstract**

The present disclosure relates to a voltage regulator that includes an error amplifier having a first output, a first non-inverting input, and a first inverting input, wherein the error amplifier is configured to generate a signal based on a first voltage at the first non-inverting input and a second voltage at the first inverting input, and circuitry coupled to the error amplifier and to an output of the voltage regulator. The circuitry may be configured to in a first mode, cause a voltage to be applied between the first inverting input and the first non-inverting input of the error amplifier at a predefined voltage level and, in a second mode, cause the first inverting input of the error amplifier to be coupled to a first reference voltage source, and the first non-inverting input of the error amplifier to be coupled to the output of the voltage regulator.

## Description

### TECHNICAL FIELD

Embodiments of the subject matter described herein relate generally to voltage regulators, such as a voltage regulator that includes a boost converter.

### BACKGROUND

Automotive systems typically require voltage regulation to accommodate sudden changes in battery voltage, which may occur, for example, during cold cranking. Such voltage regulation is typically intended to prevent the voltage supplied to the automotive system from dropping below a target voltage level such as may be required for maintaining operation of various electrical systems of the automotive system. Over time, aging and degradation of circuitry used to provide such voltage regulation can negatively impact the accuracy and robustness of the automotive system.

### BRIEF DESCRIPTION OF DRAWINGS

A more complete understanding of the subject matter may be derived by referring to the detailed description and claims when considered in conjunction with the following figures, wherein like reference numbers refer to similar elements throughout the figures. Elements in the figures are illustrated for simplicity and clarity and have not necessarily been drawn to scale. The figures along with the detailed description are incorporated and form part of the specification and serve to further illustrate examples, embodiments and the like, and explain various principles and advantages, in accordance with the present disclosure, wherein:
FIG. 1 shows an illustrative block diagram of an automotive system that includes a voltage regulator with aging mitigation circuitry, in accordance with various embodiments;
FIG. 2 shows a block diagram illustrating a voltage regulator with aging mitigation circuitry, which may be used in the automotive system of FIG. 1, in accordance with various embodiments;
FIG. 3 shows illustrative charts of various voltage levels of the voltage regulator of FIG. 2 during cranking, in accordance with various embodiments; and
FIG. 4 shows an illustrative process flow for a method of operating aging mitigation circuitry in a voltage regulator, such as the voltage regulator of FIG. 1 or FIG. 2, in accordance with various embodiments.

### DETAILED DESCRIPTION

The following detailed description is merely illustrative in nature and is not intended to limit the embodiments described herein and uses of such embodiments. Furthermore, there is no intention to be bound by any expressed or implied theory presented in the preceding technical field, background, or the following detailed description.

For simplicity and clarity of illustration, the figures illustrate the general manner of construction. Descriptions and details of well-known features and techniques may be omitted from the following detailed description to avoid unnecessarily obscuring the present disclosure. For example, the dimensions of some of the elements or regions in the figures may be exaggerated relative to other elements or regions to help improve understanding of embodiments described herein.

The terms "first," "second," "third," "fourth" and the like in the description and the claims, if any, may be used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "comprise," "include," "have" and any variations thereof, are intended to cover non-exclusive inclusions, such that a process, method, article, or apparatus that comprises a list of elements is not necessarily limited to those elements but may include other elements not expressly listed or inherent to such process, method, article, or apparatus. As used herein the terms "approximate," "approximately," "substantial" and "substantially" mean sufficient to accomplish the stated purpose in a practical manner and that minor imperfections, if any, are not significant for the stated purpose.

Along these lines, when used with references to measurable quantities including, but not limited to, dimensions, these terms mean that the quantities are equal to the values stated subject to accepted tolerances of any methods or apparatus chosen to fabricate the described structures or measure the quantities or dimensions described. Directional references such as "top," "bottom," "left," "right," "above," "below," and so forth, unless otherwise stated, are not intended to require any preferred orientation and are made with reference to the orientation of the corresponding figure or figures for purposes of illustration. As used herein, the words "exemplary" and "example" mean "serving as an example, instance, or illustration." Any implementation described herein as exemplary or an example is not necessarily to be construed as preferred or advantageous over other implementations. In addition, certain terms may also be used herein for reference only, and thus are not intended to be limiting.

Herein, elements or nodes or features are sometimes referred to as being "connected" or "coupled" together. As used herein, unless expressly stated otherwise, "connected" means that one element is directly joined to (or directly communicates with) another element in an electrical or non-electrical manner, and not necessarily mechanically. Likewise, unless expressly stated otherwise, "coupled" means that one element is directly or indirectly joined to (or directly or indirectly communicates with) another element in an electrical or non-electrical manner, and not necessarily mechanically. Thus, although the schematic illustrations shown in the figures depict exemplary arrangements of elements, additional intervening elements, devices, features, or components may be present in one or more embodiments of the depicted subject matter.

Various embodiments described herein relate to voltage regulators, such as boost regulators (sometimes referred to herein as "boost voltage regulators" or "boost regulator circuitry"), with aging mitigation circuitry and corresponding systems (e.g., automotive systems) and methods. Herein, a "boost regulator" refers to voltage regulator circuitry that includes boost converter circuitry.

Conventional automotive systems typically use voltage regulators to prevent the voltage output from a battery to other automotive system components from dropping below a threshold voltage level when sudden drops in battery voltage occur (e.g., during cranking of the engine). In one conventional approach, such a voltage regulator includes an operational amplifier that receives a battery-based feedback voltage at a first input terminal and a reference voltage at a second input terminal, where the difference between the feedback voltage and the reference voltage controls the output of the operational amplifier, which in turn attempts to maintain voltage output by the voltage regulator over a threshold voltage level. The voltage across the input terminals of the operational amplifier in such conventional voltage regulators is comparatively higher during normal operation, and is comparatively lower during voltage regulation. Conventional voltage regulators are typically in the normal operation state for a significantly greater amount of time than they are in the voltage regulation state, such that a relatively high voltage is maintained across the input terminals of the operational amplifier during most of the time of operation of the automotive system that includes the voltage regulator. Maintaining this relatively high voltage level across the input terminals of the operational amplifier in this way can be undesirable, as it causes relatively faster aging of the operational amplifier (i.e., compared to when lower voltages are used), and such accelerated aging negatively impacts the accuracy and robustness of the voltage regulator.

In one or more embodiments, an automotive system includes a voltage regulator, such as a boost voltage regulator, coupled to a battery, where the voltage regulator includes aging mitigation circuitry. The aging mitigation circuitry may include a comparator, a first switch, and a voltage source (or a current source, in accordance with one or more other embodiments). The first switch may be coupled between first and second input terminals of an error amplifier (e.g., an operational transconductance amplifier (OTA)). The first input terminal of the error amplifier may be coupled to receive a first reference voltage from a first reference voltage source. The second input terminal of the error amplifier may be coupled to the output of the voltage regulator via a feedback path that includes, for example, a voltage divider. The second switch may be coupled between the second input terminal of the error amplifier and the output of the voltage regulator (e.g., via a first node of the voltage divider as part of the feedback path).

The comparator may include first and second input terminals and an output terminal, where the first input terminal of the comparator is coupled to the output of the voltage regulator via a second node of the voltage divider, the second input terminal of the comparator is coupled to receive a second reference voltage from a second reference voltage source, and the output terminal of the comparator is coupled to control terminals of the first and second switches. The values of the resistances of the voltage divider and the first and second reference voltages may be selected such that, when the output voltage of the voltage regulator drops below a first threshold voltage level (e.g., indicating the start of a voltage regulation state), the comparator is configured to open the first switch and close the second switch, thereby disconnecting the first and second input terminals of the error amplifier from one another and connecting the second input terminal of the error amplifier to the feedback path. When the output voltage of the voltage regulator is above the first threshold voltage level (e.g., indicating that the voltage regulator is in a normal operation state), the comparator is configured to close the first switch and open the second switch, thereby connecting the first and second input terminals of the error amplifier (via the voltage source) and disconnecting the second input terminal of the error amplifier from the feedback path.

In this way, in the normal operation state, the voltage across the first and second input terminals of the error amplifier may be set to a relatively low value, thereby mitigating aging of the error amplifier that might otherwise occur due to maintaining higher voltage levels across the input terminals of the amplifier. This aging mitigation, in turn, may advantageously improve accuracy (e.g., by reducing associated shifts in DC accuracy) and robustness of the voltage regulator.

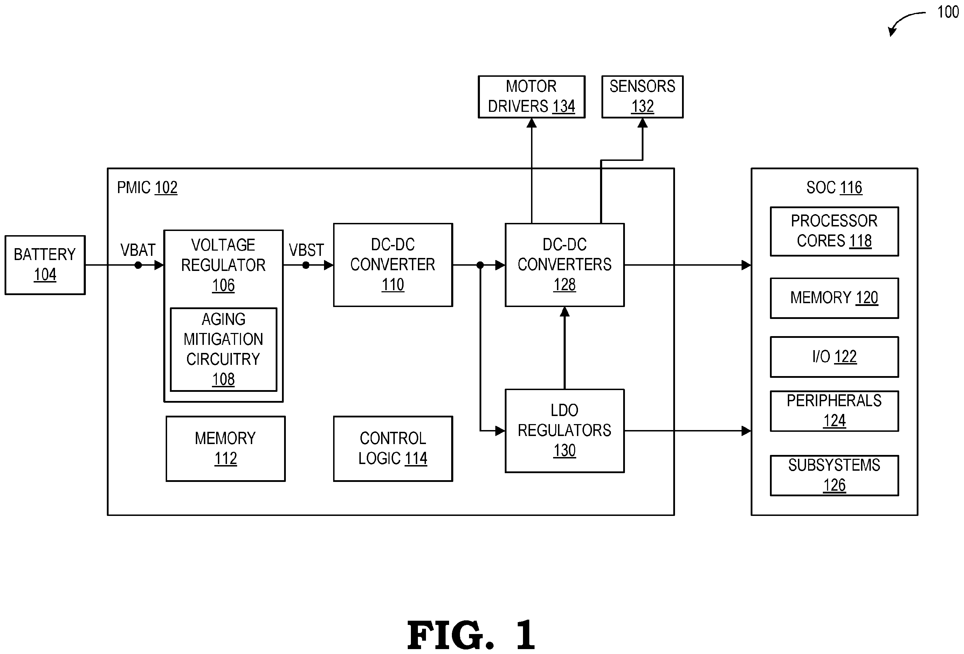

FIG. 1 shows an automotive system 100 (sometimes referred to herein as the "system 100") that includes a voltage regulator 106 with aging mitigation circuitry 108. The aging mitigation circuitry 108 may be configured to reduce the voltage offset between input terminals of an error amplifier (e.g., which may be implemented as an operational transconductance amplifier (OTA)) of the voltage regulator 106 to mitigate aging of the error amplifier, as described in more detail below.

As shown, the automotive system 100 includes a power management integrated circuit (PMIC) 102, a battery 104, a system-on-chip (SOC) 116, one or more sensors 132, and motor drivers 134. The PMIC 102 may include the voltage regulator 106, a Direct Current (DC)-DC converter 110, one or more additional DC-DC converters 128, a memory 112, control logic 114, and one or more low-voltage dropout (LDO) regulators 130. The SOC 116 may include one or more processor cores 118, a memory 120, one or more input/output (I/O) devices 122, one or more peripheral devices 124, and one or more subsystems 126.

The battery 104 may be coupled to an input of the voltage regulator 106, at which the battery 104 may provide a battery voltage VBAT. In one or more embodiments, the battery voltage VBAT may be between around 12 V to around 14V, nominally, as a non-limiting example. The voltage regulator 106 may be coupled between the battery 104 and a DC-DC converter 110. In one or more embodiments, the DC-DC converter 110 may be a synchronous buck converter.

The voltage regulator 106 may be configured to generate an output voltage VBST, which may be provided to a DC-DC converter 110. During a normal operation state, the output voltage VBST may be equal to or approximately equal to VBAT minus an offset (e.g., around 0.7 V corresponding to a voltage drop across a diode of the voltage regulator 106). During a voltage regulation state (e.g., occurring when VBST drops below a threshold voltage level), the voltage regulator 106 may be configured to maintain the voltage level of the output voltage VBST at or above a target voltage level VTRGT. For example, the target voltage level VTRGT correspond to a voltage level at or above which interruption of operation of other "downstream" components or subsystems of the system 100, such as the SOC 116, sensors 132, and motor drivers 134 may be prevented or mitigated. In one or more embodiments, the target voltage level VTRGT may be around 6 V, as a non-limiting example.

The DC-DC converter 110 may be configured to step down the voltage VBST and provide the resulting stepped-down voltage to the additional DC-DC converters 128 and the LDO regulators 130. In one or more embodiments, the DC-DC converter 110 may be a DC-DC step down buck converter.

The additional DC-DC converters 128 may receive the voltage output by the DC-DC converter 110, which the additional DC-DC converters 128 may step up or step down to generate one or more additional voltages. The additional DC-DC converters 128 may then provide these generated voltages to the SOC 116 (e.g., to one or more of the processor cores 118, the memory 120, the I/O devices 122, the peripheral devices 124, or the subsystems 126), the sensors 132, or the motor drivers 134.

The LDO regulators 130 may receive and regulate the voltage output by the DC-DC converter 110, and may provide the resultant regulated voltage or voltages to the SOC 116 (e.g., to one or both of the I/O devices 122 or the peripheral devices 124) and, in one or more embodiments, to drivers of the additional DC-DC converters 128.

In one or more embodiments, the control logic 114 may communicate with the SOC 116 over an interface (not shown), and may control the DC-DC converter 110 to scale up or scale down the voltage output by the DC-DC converter 110 based on instructions received from the SOC 116. In one or more embodiments, the memory 112 includes a one-time programmable (OTP) memory that can provide pre-set limits for voltage ranges and other parameters to be used by various devices or subsystems of the automotive system 100. In one or more embodiments, the pre-set limits of the OTP memory of the memory 112 may be stored by the manufacturer of the PMIC 102 or by a manufacturer of a vehicle in which the system 100 is disposed.

Each of the processor cores 118 of the SOC 116 may include at least one central processing unit (CPU) and a local cache memory. In one or more embodiments, the memory 120 may be a system memory of the SOC 116 that is connected to one or more of the processor cores 118, the I/O devices 122, the peripheral devices 124, or the subsystems 126 via one or more interconnects or communications busses (not shown). The memory 120 may include computer-readable instructions for operating system that may be executed by the processor cores 118 as well as other software associated with tasks performed by the SOC 116.

The I/O devices 122 may include I/O devices for applications provided by the SOC 116, such as a display, a touch screen input device, and one or more network ports, as non-limiting examples. The peripheral devices 124 may include circuitry configured to perform flash memory management, power management, interconnect management, and physical layer tasks (e.g., universal serial bus (USB) functionality), as non-limiting examples.

The sensors 132 may include one or more air-flow sensors, pressure sensors, temperature sensors, fuel sensors, speed sensors, voltage sensors, or proximity sensors, as non-limiting examples. The motor drivers 134 may be configured to drive one or more electric motors configured to convert electrical power to torque in order to turn the wheels of a vehicle that includes the system 100. The sensors 132 and the motor drivers 134 may receive power from one or more of the DC-DC converters 128.

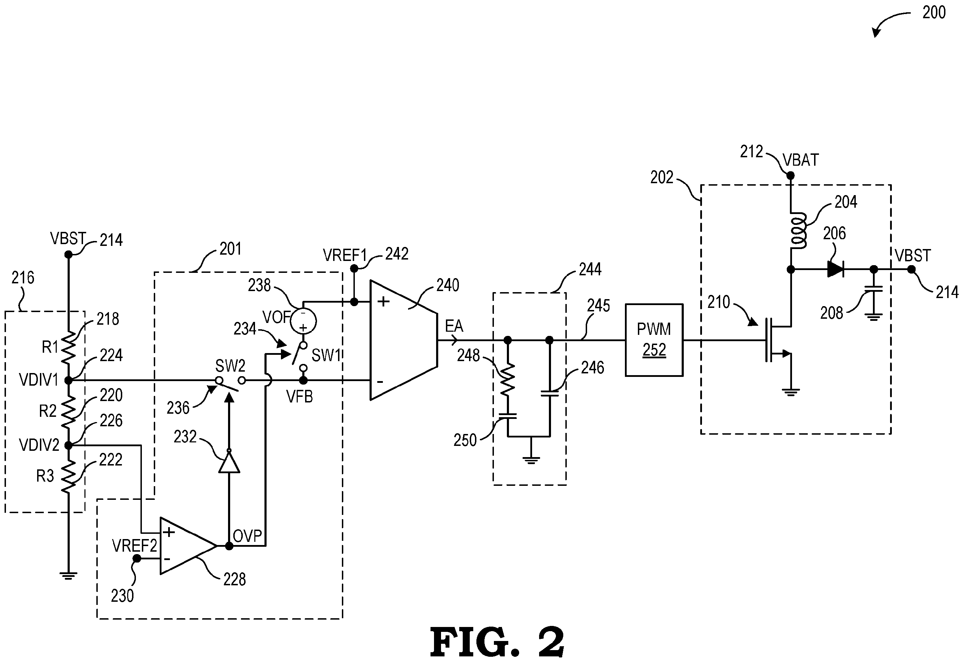

FIG. 2 shows a voltage regulator 200 that includes an error amplifier 240 and aging mitigation circuitry that is configured and arranged to prevent or mitigate aging of the error amplifier 240. In one or more embodiments, the voltage regulator 200 may correspond to or may be implemented as the voltage regulator 106 of FIG. 1.

As shown, the voltage regulator 200 may include aging mitigation circuitry 201, boost converter circuitry 202, a voltage divider 216, an error amplifier 240, integrator circuitry 244, and pulse width modulation (PWM) circuitry 252. The boost converter circuitry 202 may receive the battery voltage VBAT from a battery (e.g., the battery 104 of FIG. 1) at a node 212, may receive a PWM signal (e.g. sometimes referred to as a "modulated signal") output by the PWM circuitry 252, and may output an output voltage VBST at a node 214. The voltage divider 216 may be coupled between the node 214 and a ground or reference node and may include intermediate nodes coupled to the aging mitigation circuitry 201 and to the error amplifier 240, selectively, via the aging mitigation circuitry 201. The aging mitigation circuitry may be coupled between the voltage divider 216 and inputs of the error amplifier 240. The error amplifier 240 may be coupled between the aging mitigation circuitry 201 and the input of the PWM circuitry 252, may receive a first reference voltage VREF1 at a non-inverting input from a reference voltage source via a node 242, and may be configured to output an error amplifier signal EA. The integrator circuitry 244 may be coupled along the signal path between the output of the error amplifier 240 and the input of the PWM circuitry 252.

The boost converter circuitry 202 may include an inductor 204, a diode 206, a capacitor 208, and a transistor 210. The inductor 204 may include a first terminal coupled to the node 212 at which the battery voltage VBAT may be provided (e.g., from the battery 104 of FIG. 1) and may include a second terminal coupled to an input terminal of the diode 206 and to a drain terminal of the transistor 210. The diode 206 may include an input terminal coupled to the second terminal of the inductor 204 and to the drain terminal of the transistor 210 and may include an output terminal coupled to a first terminal of the capacitor 208 and to the node 214 at which the output voltage VBST is provided. The capacitor 208 may include a first terminal coupled to the node 214 and to the output terminal of the diode 206 and may include a second terminal coupled to a ground or reference node. The transistor 210 may include a drain terminal coupled to the second terminal of the inductor 204 and to the input terminal of the diode 206, a source terminal coupled to the ground or reference node, and a gate terminal coupled to the output of the PWM circuitry 252.

The PWM signal output by the PWM circuitry 252 may control the passage of current through the transistor 210to boost or otherwise control the output voltage VBST. In one or more embodiments, in a "normal operation" mode of the voltage regulator 200, the output voltage VBST may be equal to or approximately equal to the battery voltage VBAT minus the voltage drop across the diode 206 (e.g., around 0.6 V to 0.7 V). In a "voltage regulation" mode of the voltage regulator 200, the PWM 252 may be configured, based on the output of the error amplifier 240, to control the transistor 210 to cause VBST to be limited to a target voltage level VTGT.

The error amplifier 240 may be configured to produce the error amplifier signal EA, where the current of the error amplifier signal EA is determined based on the voltage differential across the inverting and non-inverting inputs of the error amplifier 240. In one or more embodiments, the error amplifier 240 is an operational transconductance amplifier (OTA), configured to output a current proportional to the voltage difference at its input terminals. The error amplifier signal EA may charge or discharge capacitors of the integrator circuitry 244 and may, in combination the integrator circuitry 244 control the PWM circuitry 252 via a signal path 245.

In one or more embodiments, the integrator circuitry 244 may include a capacitor 246 coupled between the signal path 245 and a ground or reference node, and may include a resistor 248 and a capacitor 250 coupled in series between the signal path 245 and the ground or reference node, where the resistor 248 and the capacitor 250 are coupled in parallel with the capacitor 246. It should be understood that this arrangement of the integrator circuitry 244 is intended to be illustrative and non-limiting, such that other suitable integrator circuitry arrangements may be used in accordance with one or more other embodiments.

During the "normal operation state" of the voltage regulator 200, while VBST is above a voltage threshold TH1, the aging mitigation circuitry 201 may be configured to cause the voltage difference between the inverting and non-inverting inputs of the error amplifier 240 to be at or around a predefined voltage level VOF (sometimes referred to as an "offset voltage level" VOF), which may be at or around the minimum voltage level required to cause the error amplifier 240 to generate an error amplifier signal EA with a current level (e.g., a negative current level) that disables the PWM circuitry 252, such that boosting does not occur. In the normal operation state, the boost converter circuitry 202 generates the output voltage VBST at a voltage level that is at or around VBAT minus the voltage drop across the diode 206. During the "voltage regulation state" of the voltage regulator 200, when the output voltage VBST drops below the voltage threshold TH1, the aging mitigation circuitry 201 may be configured to cause (e.g., by controlling switches 234 and 236) the voltage differential across the inverting and non-inverting inputs of the error amplifier 240 to be at a voltage level of around VDIV1-VREF1, where VDIV1 is a voltage the node 224 of the voltage divider 216 and is based on the output voltage VBST, and where VREF1 is the first reference voltage at the node 242. The voltage differential at the inputs of the error amplifier 240 in the voltage regulation mode causes the error amplifier 240 to generate an error amplifier signal EA with a current level that causes the PWM circuitry 252 to control the boost converter circuitry 202 to generate the output voltage VBST at a voltage level that is at or above the target voltage level VTGT (even when VBAT falls below VTGT). In one or more embodiments, the target voltage level VTGT may be around 6 V as a non-limiting example. Control of the voltages supplied at the inverting and non-inverting inputs of the error amplifier 240 by the aging mitigation circuitry 201 is described in more detail below.

The voltage divider 216 may include resistors 218, 220, and 222 having respective resistance values R1, R2, and R3, and being coupled in series between the node 214 and the ground or reference node. A node 224 is disposed at the connection point between the resistor 218 and the resistor 220 The voltage VDIV1 at the node 224 is, nominally, equal to VBST*(R2+R3)/(R1+R2+R3). A node 226 is disposed at the connection point between the resistor 220 and the resistor 222. The voltage VDIV2 at the node 226 is, nominally, equal to VBST*(R3)/(R1+R2+R3).

The aging mitigation circuitry 201 may include at least a comparator 228, switches 234 and 236 (sometimes referred to herein as the switch SW1 and the switch SW2, respectively), and a source 238. In one or more embodiments, the aging mitigation circuitry 201 includes an inverter 232. In one or more embodiments, the aging mitigation circuitry 201 may correspond to or may be implemented as the aging mitigation circuitry 108 of FIG. 1.

The comparator 228 includes an inverting input coupled to receive a second reference voltage VREF2 from a reference voltage source via a node 230 and includes a non-inverting input coupled to receive the voltage VDIV2 from the node 226 of the voltage divider 216. In one or more embodiments, the first reference voltage VREF1 is equal to or approximately equal to the second reference voltage VREF2. While the voltage VDIV2 provided at the non-inverting input of the comparator 228 is produced via the same voltage divider 216 as is used to produce the voltage VDIV1 in the present example, this is intended to be illustrative and non-limiting. For example, in one or more other embodiments, VDIV 1 and VDIV2 may be generated using two separate voltage dividers, each coupled to receive the output voltage VBST from the node 214.

The comparator 228 includes an output terminal at which the comparator 228 is configured to provide an output voltage OVP. The output of the comparator 228 is coupled to respective control terminals of the switches 234 and 236. The source 238 may selectively coupled between the inverting and non-inverting inputs of the error amplifier 240 by the switch 234. For example, in response to VDIV2 being greater than VREF2, corresponding to the normal operation state of the voltage regulator 200, the comparator 228 may be configured to produce the output voltage OVP at a voltage level sufficient to cause the switch 234 to close, thereby causing the source 238 to be connected between the inverting and non-inverting inputs of the error amplifier 240, and to cause the switch 236 to open, thereby disconnecting the inverting input of the error amplifier 240 from the node 224 of the voltage divider 216. The inverter 232 may invert the output voltage OVP and provide the resultant inverted voltage to the control terminal of the switch SW2. In one or more embodiments, the output voltage OVP is a positive voltage (e.g., a logical low digital signal) in the normal operation state, and the inverter 232 reduces the output voltage OVP to a voltage level sufficiently low to cause the switch 236 to open (e.g., a logical low digital signal). In response to VDIV2 being less than VREF2, corresponding to the voltage regulation state of the voltage regulator 200, the comparator 228 may be configured to produce the output voltage OVP at a voltage level sufficient to cause the switch 234 to open, thereby disconnecting the source 238 from the inverting input of the error amplifier 240, and to cause the switch 236 to close, thereby connecting the inverting input of the error amplifier 240 to the node 224 of the voltage divider 216.

By controlling the states of the switches 234 and 236 with the comparator 228 based on the output voltage VBST in this way, the voltage VFB at the inverting input of the error amplifier 240 becomes dependent on the output voltage VBST. For example, the voltage VFB is equal to or approximately equal to VREF1 in the voltage regulating state, occurring when VBST drops below a threshold voltage level due to a corresponding drop in the battery voltage VBAT. The voltage VFB is equal to or approximately equal to VREF 1 + VOF in the normal operation state, occurring when VBST is above the threshold voltage level, where VOF is the offset voltage applied between the input terminals of the error amplifier 240 by the source 238 when the switch 234 is closed. The difference between VIDV1 during the voltage regulating state (when VBST is below the threshold) and VREF1+VOF in the normal operating state (when VBST is above the threshold) may be relatively small, on the order of around 0.1 mV to around 0.9 mV, as a non-limiting example. In comparison, conventional voltage regulators typically allow the voltage difference between input terminals of an error amplifier to be around 100 mV to around 1 V.

In this way, the aging mitigation circuitry 201 may advantageously reduce the voltage differential VOF across the inputs of the error amplifier 240 during the normal operation state (in which the voltage regulator 200 remains during most of its operational lifespan for many applications, such as automotive applications), thereby advantageously mitigating aging effects associated with comparatively higher voltage differentials commonly applied in conventional approaches. Such aging mitigation may, for example, prevent or mitigate uncontrolled offset drift (associated with shifts in DC accuracy of the voltage regulator), which may otherwise negatively impact the accuracy and robustness of the voltage regulator 200.

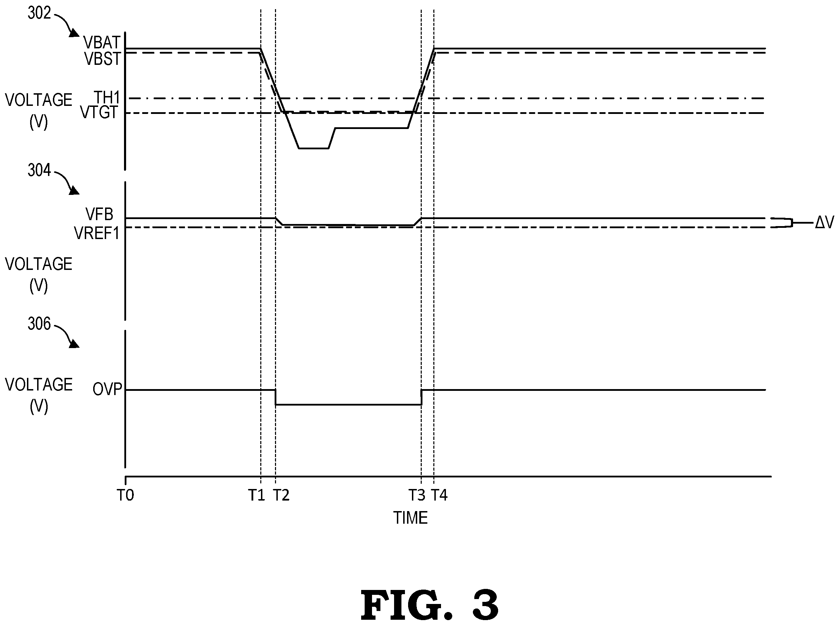

FIG. 3 shows charts 302, 304, and 306 illustrating various voltages and voltage thresholds of the voltage regulator 200 of FIG. 2 before, during, and after an exemplary cranking event. FIG. 3 is described here with reference to elements of the voltage regulator 200 of FIG. 2.

As shown in chart 302, from time T0 to time T1 and after time T4, the battery voltage VBAT and the output voltage VBST of the voltage regulator 200 are at respective nominal voltage levels (around 12 V and around 11.3 V, respectively, as a non-limiting example). Time T1 corresponds to initiation of a cranking event of an automotive system (e.g., the automotive system 100 of FIG. 1) that includes the voltage regulator 200. From time T1 to time T2, the output voltage VBST begins drops alongside the battery voltage VBAT. At time T2, the output voltage VBST drops below a predetermined threshold voltage level TH1, in response to which the voltage regulator 200 transitions from the normal operation state to the voltage regulation state. For example, as shown in chart 306, at time T2, the output voltage OVP of the comparator 228 may drop by an amount sufficient to cause the switch 236 to close and the switch 234 to open. In one or more embodiments, this drop in the output voltage OVP may correspond to a change in OVP from a digital logical high level to a digital logical low level. While the voltage regulator 200 is in the voltage regulation state from time T2 to time T3, the error amplifier 240 regulates the output voltage VBST to be maintained at or above a target voltage level VTGT. As shown, TH1 is set to a voltage level greater than that of VTGT to cause the voltage regulator 200 to transition to the voltage regulation state before VBAT and VBST drop below VTGT. As shown in chart 304, the voltage FB provided at the inverting input of the error amplifier 240 experiences a relatively small change in voltage ΔV after the switch 236 is closed and the switch 234 is opened at time T2, as the voltage VFB transitions from (VREF1+VOF) to VDIV1. Here, ΔV is equal to or approximately equal to (VREF1+VOF)-VDIV1. In one or more embodiments ΔV may be around 0.1 mV to around 0.9 mV, as a non-limiting example.

At time T3, VBST rises above the threshold TH1 and the voltage regulator 200 enters the normal operation state. As shown in chart 306, at time T3, the output voltage OVP increases, returning to the previous voltage level (e.g., the voltage level of OVP between T0 and T2), sufficient to cause the switch 236 to open and the switch 234 to close. In one or more embodiments, this drop in the output voltage OVP may correspond to a change in OVP from a digital logical low level to a digital logical high level. At time T3, due to the change in the states of the switches 234 and 236, the voltage FB at the inverting input of the error amplifier 240 transitions back to (VREF 1 + VOF), such that the voltage drop across the input terminals of the error amplifier 240 is at or around VOF. After time T3, the voltage levels of VBAT and VBST continue to rise until reaching nominal levels associated with the normal operation state at time T4.

Control of the switches 234 and 236 by the output voltage OVP limits the voltage across the input terminals of the error amplifier 240 in the normal operation state (prior to time T2 and following time T3), and allows the error amplifier 240 to perform intended voltage regulation functions in the voltage regulation state (from time T2 to time T3). In this way, the application of OVP to control the switches 234 and 236 may mitigate aging of the error amplifier 240 without significantly impacting voltage regulation functions thereof.

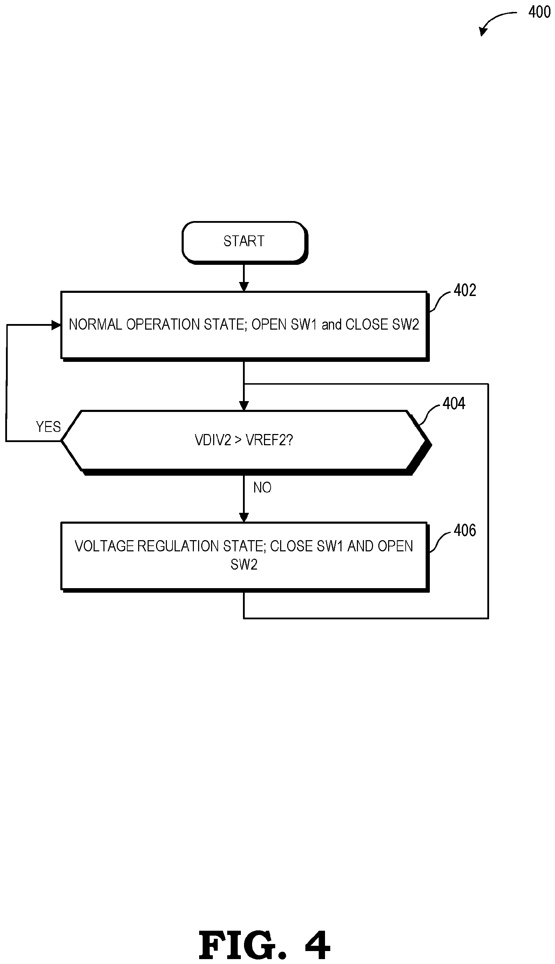

FIG. 4 shows an illustrative process flow for a method 400 by which aging mitigation circuitry (e.g., the aging mitigation circuitry 108) of a voltage regulator (e.g., the voltage regulator 106 of FIG. 1 or the voltage regulator 200 of FIG. 2) may operate in a normal operation state and a voltage regulation state. The method 400 is described with reference to elements of the voltage regulator 200 of FIG. 2, and aspects of such elements already described above are not necessarily repeated here for brevity. It should be understood that the reference to elements of the voltage regulator 200 is illustrative and not limiting, at least in that other suitable circuitry may be used when carrying out the method 400 in one or more other embodiments.

At block 402, in the normal operation state, the output voltage OVP output by the comparator 228 causes the switch SW2 (i.e., switch 236) to be open and the switch SW1 (i.e., switch 234) to be closed. This causes the source 238 to be connected between the inverting and non-inverting inputs of the error amplifier 240, which is configured to limit the voltage between the inverting and non-inverting inputs to the offset voltage VOF. The offset voltage VOF may be set to a minimum offset voltage level required to compensate intrinsic offset of the error amplifier (e.g., less than 10 mV). For example, the offset voltage VOF may be set to a level such that the intrinsic offset of the error amplifier minus VOF is negative in order to force negative current at the output of the error amplifier 240, such that the PWM is disabled.

At block 404, if the voltage VDIV2 at the non-inverting input of the comparator 228 is greater the reference voltage VREF2 at the inverting input of the comparator 228, the method 400 proceeds to the block 402 at which the voltage regulator 200 is in the normal operation state and the comparator 228 generates the output voltage OVP at a voltage level sufficient to open the switch SW2 and close the switch SW1. Otherwise (i.e., if the voltage DIV2 is less than the reference voltage VREF2), the method 400 proceeds to block 406 at which the voltage regulator 200 is in the voltage regulation state and the comparator 228 generates the output voltage OVP at a voltage level sufficient to close the switch SW2 and open the switch SW1.

At block 406, in the voltage regulation state, the output voltage OVP output by the comparator 228 causes the switch SW2 to be closed and the switch SW1 to be open. This causes the source 238 to be disconnected between the inverting and non-inverting inputs of the error amplifier 240, and causes the voltage VDIV1 to be connected to the inverting input of the error amplifier 240. The voltage VDIV2 is periodically checked against the reference voltage VREF2 at the comparator 228 (corresponding to a return to block 404).

In an example embodiment, a voltage regulator includes an error amplifier having a first output, a first non-inverting input, and a first inverting input, where the error amplifier is configured to generate a signal based on a first voltage at the first non-inverting input and a second voltage at the first inverting input, and circuitry coupled to the error amplifier and to an output of the voltage regulator. The circuitry may be configured to, in a first mode, cause a voltage to be applied between the first inverting input and the first non-inverting input of the error amplifier at a predefined voltage level, and, in a second mode, cause the first inverting input of the error amplifier to be coupled to a first reference voltage source, and the first non-inverting input of the error amplifier to be coupled to the output of the voltage regulator.

In one or more embodiments, the voltage regulator further includes a boost converter circuitry having a second output and being configured to generate an output voltage at the second output, wherein the output voltage of the boost converter circuitry is controlled based on the signal generated by the error amplifier.

In one or more embodiments, the circuitry includes a first switch coupled between the first inverting input of the error amplifier and the first non-inverting input of the error amplifier, a second switch coupled to the first inverting input of the error amplifier, a comparator having a second inverting input, a second non-inverting input, and a third output, where the second inverting input is coupled to a second reference voltage source, the second non-inverting input is coupled to the output voltage of the boost converter circuitry, and the third output is coupled to respective control terminals of the first switch and the second switch, and a source that is selectively coupled to at least one of the first inverting input of the error amplifier or the first non-inverting input of the error amplifier via the first switch, wherein the source is a current source or a voltage source.

In one or more embodiments, the source is a voltage source including a first terminal connected to the first non-inverting input of the error amplifier and includes a second terminal that is selectively coupled to the first inverting input via the first switch.

In one or more embodiments, the voltage regulator further includes at least one voltage divider coupled to the second output of the boost converter circuitry. The second non-inverting input of the comparator may be coupled to the second output of the boost converter circuitry via a first node of the at least one voltage divider, and the second switch may selectively couple the first inverting input of the error amplifier to the boost converter circuitry via a second node of the at least one voltage divider.

In one or more embodiments, the comparator is configured to, in the first mode, close the first switch and open the second switch, and, in the second mode, close the second switch and open the first switch.

In one or more embodiments, the circuitry further includes an inverter coupled between the third output of the comparator and a control terminal of the second switch.

In one or more embodiments, the voltage regulator further includes a signal path coupled to the first output of the error amplifier, integrator circuitry coupled along the signal path, and pulse width modulation circuitry coupled between the signal path and the boost converter circuitry. The pulse width modulation circuitry may be configured to generate a modulated signal based on the signal output by the error amplifier and to provide the modulated signal to control a transistor of the boost converter circuitry.

In an example embodiment, an automotive system includes a voltage regulator having an error amplifier having a first output, a first non-inverting input, and a first inverting input, where the error amplifier is configured to generate a signal based on a first voltage at the first non-inverting input and a second voltage at the first inverting input, boost converter circuitry having a second output and being configured to generate an output voltage at the second output, where the output voltage of the boost converter circuitry is controlled based on the signal generated by the error amplifier, and circuitry coupled to the error amplifier and to the second output of the boost converter circuitry. The circuitry may be configured to, in a first mode, cause a voltage to be applied between the first inverting input and the first non-inverting input of the error amplifier at a predefined voltage level, and, in a second mode, cause the first inverting input of the error amplifier to be coupled to a first reference voltage source, and the first non-inverting input of the error amplifier to be coupled to the second output of the boost converter circuitry.

In one or more embodiments, the circuitry includes a first switch coupled between the first inverting input of the error amplifier and the first non-inverting input of the error amplifier, a second switch coupled to the first inverting input of the error amplifier, a comparator having a second inverting input, a second non-inverting input, and a third output, where the second inverting input is coupled to a second reference voltage source, the second non-inverting input is coupled to the output voltage of the boost converter circuitry, and the third output is coupled to respective control terminals of the first switch and the second switch, and a source that is selectively coupled to at least one of the first inverting input of the error amplifier or the first non-inverting input of the error amplifier via the first switch. The source may be a current source or a voltage source.

In one or more embodiments, the source is a voltage source including a first terminal connected to the first non-inverting input of the error amplifier and includes a second terminal that is selectively coupled to the first inverting input via the first switch.

In one or more embodiments, the automotive system further includes comprising at least one voltage divider coupled to the second output of the boost converter circuitry. The second non-inverting input of the comparator may be coupled to the second output of the boost converter circuitry via a first node of the at least one voltage divider, and the second switch may selectively couple the first inverting input of the error amplifier to the boost converter circuitry via a second node of the at least one voltage divider.

In one or more embodiments, the comparator is configured to, in the first mode, close the first switch and open the second switch, and, in the second mode, close the second switch and open the first switch.

In one or more embodiments, the circuitry further includes an inverter coupled between the third output of the comparator and a control terminal of the second switch.

In one or more embodiments, the automotive system further includes a signal path coupled to the first output of the error amplifier, integrator circuitry coupled along the signal path, and pulse width modulation circuitry coupled between the signal path and the boost converter circuitry. The pulse width modulation circuitry may be configured to generate a modulated signal based on the signal output by the error amplifier and to provide the modulated signal to control a transistor of the boost converter circuitry.

In an example embodiment, a method includes causing, by circuitry of a voltage regulator in response to an output voltage of the voltage regulator being above a threshold voltage level, a voltage difference across first and second inputs of an error amplifier to be applied at a predefined voltage level, and causing, by the circuitry of the voltage regulator in response to the output voltage being below the threshold voltage level, the first input of the error amplifier to be coupled to a reference voltage source and the second input of the error amplifier to be coupled to an output of the voltage regulator.

In one or more embodiments, causing the voltage difference across the first and second inputs of the error amplifier to be applied at the predefined voltage level includes causing, by a comparator of the circuitry, a first switch of the circuitry to close, where the first switch is coupled between the first and second inputs of the error amplifier, and causing, by the comparator, a second switch of the circuitry to open, where the second switch is coupled between the second input of the error amplifier and the output of the voltage regulator.

In one or more embodiments, causing the first input of the error amplifier to be coupled to the reference voltage source and the second input of the error amplifier to be coupled to the output of the voltage regulator includes causing, by the comparator, the first switch of the circuitry to open, and causing, by the comparator, the second switch of the circuitry to close.

In one or more embodiments, the method further includes receiving, at a first input of the comparator, a voltage that is based on the output voltage of the voltage regulator, and receiving, at a second input of the comparator, a second reference voltage.

In one or more embodiments, the method further includeas controlling a transistor of boost converter circuitry of the voltage regulator based on an output signal generated by the error amplifier, wherein an output of the boost converter circuitry corresponds to the output of the voltage regulator.

Although the operations of the method(s) herein are shown and described in a particular order, the order of the operations of each method may be altered so that certain operations may be performed in an inverse order or so that certain operations may be performed, at least in part, concurrently with other operations. In one or more other embodiments, instructions or sub-operations of distinct operations may be implemented in an intermittent and/or alternating manner.

It should also be noted that at least some of the operations for the method(s) described herein may be implemented using software instructions stored on a computer useable storage medium for execution by a computer. As an example, an embodiment of a computer program product includes a computer useable storage medium to store a computer readable program. The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk.

Alternatively, embodiments herein may be implemented entirely in hardware or in an implementation containing both hardware and software elements. In embodiments which use software, the software may include but is not limited to firmware, resident software, microcode, or other suitable software.

As used herein the terms "circuit" and "circuitry," including the term "processing circuitry" and related terminology means any suitable combination(s) of analog or digital circuit elements, hardware, firmware, software, and the like; including but not limited to, application-specific integrated circuits (ASICs), field programmable gate arrays (FPGAs), microcontrollers, and microprocessors. It will be understood that the term "circuitry" encompasses nonvolatile and volatile memory devices including, but not limited to random access memory (RAM), read-only memory (ROM), and the like, which can be implemented using any suitable devices, such as SRAM, DRAM, or magnetic storage devices as non-limiting examples. Along these lines it will be understood that references to a "processor" or "processing circuitry" can include devices in which general purpose computing devices includes or is otherwise coupled to memory which stores machine-readable instructions configured to cause the processing circuitry to perform the described actions. Such instructions can be stored as instructions in a high level programming language that is readable by human beings which are that are interpreted or compiled into object code or machine language, or they may be stored directly in a low-level language such as object code or machine language or another suitable representation, as nonlimiting examples.

It will be further understood that, unless explicitly stated otherwise, that features such as processing circuitry, memory, and related circuitry and devices can be implemented by any suitable combinations of one or more localized devices including, but not limiting to distributed systems formed by multiple distinct devices in communication with each other via direct electrical communication connections, wireless communication connections, and via public or private communication networks including the Internet. It will further be understood processing circuitry and related devices may be implemented by one or more physical machines or by virtual machines including, but not limited to, virtualized computing environments provided within a "cloud" computing environment or other virtualization systems.

While at least one exemplary embodiment has been presented in the foregoing detailed description, it should be appreciated that a vast number of variations exist. It should also be appreciated that exemplary embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A voltage regulator comprising:
an error amplifier having a first output, a first non-inverting input, and a first inverting input, wherein the error amplifier is configured to generate a signal based on a first voltage at the first non-inverting input and a second voltage at the first inverting input; and
circuitry coupled to the error amplifier and to an output of the voltage regulator, wherein the circuitry is configured to:
in a first mode, cause a voltage to be applied between the first inverting input and the first non-inverting input of the error amplifier at a predefined voltage level; and
in a second mode, cause the first inverting input of the error amplifier to be coupled to a first reference voltage source, and the first non-inverting input of the error amplifier to be coupled to the output of the voltage regulator.

2. The voltage regulator of claim 1, further comprising:
a boost converter circuitry having a second output and being configured to generate an output voltage at the second output, wherein the output voltage of the boost converter circuitry is controlled based on the signal generated by the error amplifier.

3. The voltage regulator of claim 2, wherein the circuitry comprises:
a first switch coupled between the first inverting input of the error amplifier and the first non-inverting input of the error amplifier;
a second switch coupled to the first inverting input of the error amplifier;
a comparator having a second inverting input, a second non-inverting input, and a third output, wherein the second inverting input is coupled to a second reference voltage source, the second non-inverting input is coupled to the output voltage of the boost converter circuitry, and the third output is coupled to respective control terminals of the first switch and the second switch; and
a source that is selectively coupled to at least one of the first inverting input of the error amplifier or the first non-inverting input of the error amplifier via the first switch, wherein the source is a current source or a voltage source.

4. The voltage regulator of claim 3, wherein the source is a voltage source including a first terminal connected to the first non-inverting input of the error amplifier and includes a second terminal that is selectively coupled to the first inverting input via the first switch.

5. The voltage regulator of claim 3 or 4, further comprising at least one voltage divider coupled to the second output of the boost converter circuitry, wherein the second non-inverting input of the comparator is coupled to the second output of the boost converter circuitry via a first node of the at least one voltage divider, and wherein the second switch selectively couples the first inverting input of the error amplifier to the boost converter circuitry via a second node of the at least one voltage divider.

6. The voltage regulator of claim 5, wherein the comparator is configured to:
in the first mode, close the first switch and open the second switch; and
in the second mode, close the second switch and open the first switch.

7. The voltage regulator of claim 6, wherein the circuitry further comprises an inverter coupled between the third output of the comparator and a control terminal of the second switch.

8. The voltage regulator of claim 7, further comprising:
a signal path coupled to the first output of the error amplifier;
integrator circuitry coupled along the signal path; and
pulse width modulation circuitry coupled between the signal path and the boost converter circuitry, wherein the pulse width modulation circuitry is configured to generate a modulated signal based on the signal output by the error amplifier and to provide the modulated signal to control a transistor of the boost converter circuitry.

9. An automotive system comprising the voltage regulator of any preceding claim.

10. A method comprising:
causing, by circuitry of a voltage regulator in response to an output voltage of the voltage regulator being above a threshold voltage level, a voltage difference across first and second inputs of an error amplifier to be applied at a predefined voltage level; and
causing, by the circuitry of the voltage regulator in response to the output voltage being below the threshold voltage level, the first input of the error amplifier to be coupled to a reference voltage source and the second input of the error amplifier to be coupled to an output of the voltage regulator.

11. The method of claim 10, wherein causing the voltage difference across the first and second inputs of the error amplifier to be applied at the predefined voltage level comprises:
causing, by a comparator of the circuitry, a first switch of the circuitry to close, wherein the first switch is coupled between the first and second inputs of the error amplifier; and
causing, by the comparator, a second switch of the circuitry to open, wherein the second switch is coupled between the second input of the error amplifier and the output of the voltage regulator.

12. The method of claim 11, wherein causing the first input of the error amplifier to be coupled to the reference voltage source and the second input of the error amplifier to be coupled to the output of the voltage regulator comprises:
causing, by the comparator, the first switch of the circuitry to open; and
causing, by the comparator, the second switch of the circuitry to close.

13. The method of claim 12, further comprising:
receiving, at a first input of the comparator, a voltage that is based on the output voltage of the voltage regulator; and
receiving, at a second input of the comparator, a second reference voltage.

14. The method of any one of claims 10 to 13, further comprising:
controlling a transistor of boost converter circuitry of the voltage regulator based on an output signal generated by the error amplifier, wherein an output of the boost converter circuitry corresponds to the output of the voltage regulator.

## Amended claims

### Amended claims in accordance with Rule 137(2) EPC.

1. A voltage regulator (200) comprising:
an error amplifier (240) having a first output, a first non-inverting input, and a first inverting input, wherein the error amplifier is configured to generate a signal based on a first voltage at the first non-inverting input and a second voltage at the first inverting input;
circuitry (201) coupled to the error amplifier (240) and to an output of the voltage regulator (200), wherein the circuitry is configured to:
in a first mode, cause a voltage to be applied between the first inverting input and the first non-inverting input of the error amplifier (240) at a predefined voltage level; and
in a second mode, cause the first non-inverting input of the error amplifier (240) to be coupled to a first reference voltage source (242), and the first inverting input of the error amplifier to be coupled to the output of the voltage regulator (200);
a boost converter circuitry (202) having a second output (214) and being configured to generate an output voltage at the second output, wherein the output voltage of the boost converter circuitry is controlled based on the signal generated by the error amplifier (240);
a signal path (245) coupled to the first output of the error amplifier (240);
integrator circuitry (244) coupled along the signal path (245); and
pulse width modulation circuitry (252) coupled between the signal path (245) and the boost converter circuitry (202), wherein the pulse width modulation circuitry is configured to generate a modulated signal based on the signal output by the error amplifier (240) and to provide the modulated signal to control a transistor (210) of the boost converter circuitry; wherein:
the predefined voltage level is at or around a minimum voltage level required to cause the error amplifier (240) to generate an error amplifier signal with a current level that disables the pulse width modulation circuitry (252) such that boosting does not occur.

2. The voltage regulator (200) of claim 1, wherein the circuitry (201) comprises:
a first switch (234) coupled between the first inverting input of the error amplifier and the first non-inverting input of the error amplifier (240);
a second switch (236) coupled to the first inverting input of the error amplifier (240);
a comparator (228) having a second inverting input, a second non-inverting input, and a third output, wherein the second inverting input is coupled to a second reference voltage source (230), the second non-inverting input is coupled to the output voltage of the boost converter circuitry (202), and the third output is coupled to respective control terminals of the first switch (234) and the second switch (236); and
a source (238) that is selectively coupled to at least one of the first inverting input of the error amplifier (240) or the first non-inverting input of the error amplifier via the first switch (234), wherein the source is a current source or a voltage source.

3. The voltage regulator (200) of claim 2, wherein the source (238) is a voltage source including a first terminal connected to the first non-inverting input of the error amplifier (240) and includes a second terminal that is selectively coupled to the first inverting input via the first switch (234).

4. The voltage regulator (200) of claim 2 or 3, further comprising at least one voltage divider (216) coupled to the second output (214) of the boost converter circuitry (202), wherein the second non-inverting input of the comparator (228) is coupled to the second output of the boost converter circuitry via a first node (226) of the at least one voltage divider, and wherein the second switch (236) selectively couples the first inverting input of the error amplifier (240) to the boost converter circuitry via a second node (224) of the at least one voltage divider.

5. The voltage regulator (200) of claim 4, wherein the comparator (228) is configured to:
in the first mode, close the first switch (234) and open the second switch (236); and
in the second mode, close the second switch (236) and open the first switch (234).

6. The voltage regulator (200) of claim 5, wherein the circuitry (201) further comprises an inverter (232) coupled between the third output of the comparator (228) and a control terminal of the second switch (236).

7. An automotive system (100) comprising the voltage regulator (200) of any preceding claim.

8. A method comprising:
causing, by circuitry of a voltage regulator (200) in response to an output voltage of the voltage regulator being above a threshold voltage level, a voltage difference across first and second inputs of an error amplifier (240) to be applied at a predefined voltage level; and
causing, by the circuitry of the voltage regulator (200) in response to the output voltage being below the threshold voltage level, the first input of the error amplifier (240) to be coupled to a reference voltage source (242) and the second input of the error amplifier to be coupled to an output of the voltage regulator; and
controlling, by pulse width magnitude circuitry (252) of the voltage regulator (200), a transistor (210) of boost converter circuitry (202) of the voltage regulator (200) based on an output signal generated by the error amplifier (240), wherein an output of the boost converter circuitry corresponds to the output of the voltage regulator; wherein:
the predefined voltage level is at or around a minimum voltage level required to cause the error amplifier (240) to generate an error amplifier signal with a current level that disables the pulse width modulation circuitry (252) such that boosting does not occur.

9. The method of claim 10, wherein causing the voltage difference across the first and second inputs of the error amplifier (240) to be applied at the predefined voltage level comprises:
causing, by a comparator (228) of the circuitry, a first switch (234) of the circuitry to close, wherein the first switch is coupled between the first and second inputs of the error amplifier (240); and
causing, by the comparator (228), a second switch (236) of the circuitry to open, wherein the second switch is coupled between the second input of the error amplifier (240) and the output of the voltage regulator (200).

10. The method of claim 9, wherein causing the first input of the error amplifier (240) to be coupled to the reference voltage source (242) and the second input of the error amplifier to be coupled to the output of the voltage regulator (200) comprises:
causing, by the comparator (228), the first switch (234) of the circuitry to open; and
causing, by the comparator (228), the second switch (236) of the circuitry to close.

11. The method of claim 10, further comprising:
receiving, at a first input of the comparator (228), a voltage that is based on the output voltage of the voltage regulator (200); and
receiving, at a second input of the comparator (228), a second reference voltage.
